# EUROPÄISCHE PATENTSCHRIFT

(11) **EP 3 832 356 B1**
(45) Veröffentlichungstag und Bekanntmachung des Hinweises auf die Patenterteilung: **16.09.2026**
(21) Anmeldenummer: 20211252.0
(22) Anmeldetag: 02.12.2020
(51) Int. Cl.: G02B 1/115, G02B 5/28

(54) **OPTISCHE KOMPONENTE MIT KRATZRESISTENTER ANTIREFLEXBESCHICHTUNG UND VERFAHREN ZU DEREN HERSTELLUNG**
OPTICAL COMPONENT WITH SCRATCH-RESISTANT ANTIREFLEX COATING AND PROCESS FOR ITS PRODUCTION
COMPOSANT OPTIQUE AVEC REVÊTEMENT ANTIRÉFLÉCHISSANT RÉSISTANT AUX RAYURES ET PROCÉDÉ POUR SA PRODUCTION

(30) Priorität: 06.12.2019 DE 102019133371
(43) Veröffentlichungstag der Anmeldung: 09.06.2021
(73) Patentinhaber: SCHOTT AG, 55122 Mainz (DE)
(72) Erfinder: APITZ, Dirk, Dr., 1012 Lausanne (CH); BRAUNECK, Ulf, Dr., 64823 Groß-Umstadt (DE); KRUMMENACKER, Selim, 1470 Estavayer-le-Lac (CH); MANGOLD, Stephanie, 55288 Schornsheim (DE); WEBER, Gernot, 55595 Braunweiler (DE)
(74) Vertreter: Blumbach · Zinngrebe Patentanwälte PartG mbB

(56) Entgegenhaltungen:
- EP-A2- 0 429 210
- DE-A1- 102011 076 754
- US-A- 4 907 846
- US-A- 4 995 684

## Beschreibung

### Gebiet der Erfindung

Die Erfindung bezieht sich auf eine mit einer Antireflexbeschichtung versehene optische Komponente mit einem Substrat und auf ein Verfahren zur Beschichtung der optischen Komponente sowie deren Verwendung.

### Hintergrund der Erfindung

Antireflexbeschichtungen werden heutzutage vielfach dafür eingesetzt, die Transmission transparenter Substrate, wie etwa von Sichtscheiben, zu verbessern oder andererseits störende Reflexe am Substrat abzuschwächen. Je nach Verwendungszweck des Substrats kann die Antireflexbeschichtung allerdings hohen Abnutzungsbelastungen unterliegen. Beispielsweise treffen auf eine Außenbeschichtung einer Fahrzeug-Sichtscheibe oder während der Fahrt Sand- und Staubpartikel mit hoher Geschwindigkeit auf und können die Beschichtung im Laufe der Zeit abtragen. Eine besondere Belastung entsteht bei solchen Scheiben auch, wenn ein Scheibenwischer über die verschmutzte Scheibe geführt wird. Die Sand- und Staubpartikel werden dabei nicht nur über die Scheibe befördert, sondern gleichzeitig durch die Gummilippe des Scheibenwischers gegen die Scheibe gepresst. In der Beschichtung können auf diese Weise lange Kratzer entstehen.

Kratzer und andere Beschädigungen führen durch Lichtstreuung zu Trübungen, vermindern durch Veränderung der Beschichtung deren Antireflexwirkung und wirken daher dem Zweck einer Antireflexbeschichtung gerade entgegen.

Es besteht daher ein Bedarf an einer optischen Komponente mit einem Substrat und einer Antireflexbeschichtung, die eine hohe Widerstandsfähigkeit gegen Verkratzen und Abrieb aufweist und besonders klimabeständig ist.

Eine Abrasion bzw. die Ausbildung von Kratzern geht typischerweise dadurch von statten, dass ein abrasives Medium, zum Beispiel ein Sandkorn, durch laterale Bewegung über die Oberfläche oder durch normales Auftreffen zum Teil nur nanometrisch große Risse im Material verursacht. Sichtbar und optisch relevant werden die Risse meist erst dann, wenn entlang der Risskanten zusätzlich Ausbrüche entstehen, die Licht streuen, oder sogar Schichtablösungen auftreten. Das Verhalten einer Oberfläche, Risse auszubilden, hängt von einer Vielzahl von Parametern ab, wie z. B. Elastizitätsmodul, Oberflächenrauheit, Sprödheit, Oberflächenspannung oder die Tendenz des Substrates und des abrasiven Mediums kovalente Bindungen einzugehen. Die Härte des Substrates, z. B. mit einem Indenter-Verfahren (z. B. Knoop-Härte) gemessen, ist ein sehr wichtiger Einflussparameter.

Aus der US 2005/0074591 A1 ist ein transparentes Substrat mit einer abriebfesten Antireflexbeschichtung bekannt. Die Antireflexbeschichtung wird aus vier Lagen mit abwechselndem hohen und niedrigem Brechungsindex zusammengesetzt. Die niedrigbrechenden Schichten bestehen aus Siliziumoxid (SiO₂), die hochbrechenden Schichten aus Siliziumnitrid (Si₃N₄) oder Zinnoxid (SnO₂). Die oberste Schicht des Schichtstapels wird dabei aus einer niedrigbrechenden Schicht gebildet. Nachteilig ist hier, dass die niedrigbrechende Siliziumoxidschicht verglichen mit den hochbrechenden Materialien, insbesondere verglichen mit Si₃N₄ sehr weich ist. Gerade die oberste Schicht kann sich daher nach wie vor schnell abnutzen. Ist die oberste Schicht abgetragen, so bildet dann eine hochbrechende Schicht die Oberfläche. Dies führt im ungünstigsten Fall zu einer Umkehrung des Entspiegelungs-Effekts, so dass die Schicht nun also an der Kratzerstelle eher wie ein dielektrischer (Halb-)Spiegel wirkt.

Weitere Antireflexbeschichtungen sind aus der DE 10 2011 076754 A1 bekannt.

Es existieren optische Anwendungen in verschiedenen Infrarotbereichen des elektromagnetischen Spektrums. Für den Einsatz in einem einzelnen Spektralbereich werden üblicherweise Materialien wie Saphir, Germanium oder Silizium verwendet. Soll eine optische Komponente aber gleichzeitig in mehreren Bereichen des elektromagnetischen Spektrums funktionsfähig sein, beispielweise
- im sichtbaren Wellenlängen-Bereich zwischen ca. 450 nm und ca. 650 nm,
- bei einer Laserwellenlänge im nahen Infrarotbereich zwischen 1000 nm und 1600 nm, beispielsweise bei den Laserwellenlängen von 1053nm, 1064 nm, 1535 nm oder 1550 nm,
- im mittleren Infrarotbereich zwischen 3500 nm und 5000 nm, sowie
- im fernen Infrarotbereich zwischen 7500 nm und 12000 nm
stehen nur wenige Materialien als Substrat für die optische Komponente zur Verfügung.

Die Transmission für eine Wellenlänge im Bereich im nahen Infrarotbereich zwischen 1000 nm und 1600 nm kann für eine LIDAR bzw. sogenannte "range finder"-Anwendung benötigt werden. Range Finder, deren aktives Lasermedium z. B. aus Ytterbium und Erbium dotiertem Phosphatglas, wie z. B. LG940, LG950 oder LG960 (hergestellt von der SCHOTT AG), aufgebaut sind, emittieren bei 1535 nm.

Beispiele für geeignete Substrat-Materialien für derartige Anwendungen sind Zinksulfid und Zinkselenid. Die meisten Materialien, welche für Anwendungen im infraroten Spektralbereich genutzt werden, transmittieren in mindestens einem oder mehrerer der vier oben genannten Bereiche nicht. So ist Saphir zwar im sichtbaren, nahen und mittleren Infrarotbereich nutzbar, transmittiert aber oberhalb von 6000 nm nicht mehr. Germanium und Silizium, welche im fernen Infrarotbereich transmittieren, lassen sich als Fenster im Sichtbaren nicht nutzen. Die Auswahl an Substratmaterialen für eine Nutzung vom sichtbaren bis in den fernen Infrarotbereich ist stark eingeschränkt und somit auch die Verfügbarkeit beliebiger Brechungsindices möglicher Substratmaterialien.

Derartige Materialien sind aber häufig weich bzw. wenig abrasionsbeständig und spröde und haben lediglich einen Brechungsindex im mittleren bis hohen Bereich (1,7 bis 2,5). Der relativ hohe Brechungsindex ist mit einer starken Reflexivität der Oberfläche des aus einem derartigen Material bestehenden Substrates verbunden. In solchen Fällen wird daher eine Anti-Reflexionsbeschichtung benötigt. Auch zu diesem Zweck sind nur wenige Materialien verfügbar. Als hochbrechende Schichtmaterialien für die Anti-Reflexionsbeschichtung kommen beispielweise Zinksulfid (ZnS), Hafniumoxid (HfO₂), Scandiumoxid (Sc₂O₃), Yttriumoxid (Y₂O₃), Zirkonoxid (ZrO²), Tantaloxid (Ta₂O₅), Nioboxid (Nb₂O₅), Titanoxid (TiO₂) und Ceroxid (CeO₂) in Betracht. Dabei sind viele der Oxide nicht in dem kompletten beschriebenen Spektralbereich sehr gut transparent und nur als wenige dünne Schichten nutzbar. ZnS ist das Standardmaterial für hochbrechende Schichten, die vom sichtbaren bis zum ferninfraroten Spektralbereich transparent sein sollen. Als niedrig brechende Schichtmaterialien für die Anti-Reflexionsbeschichtung kommen beispielweise Bariumfluorid (BaF₂), Kalziumfluorid (CaF₂), Cerfluorid (CeF₃), Lanthanfluorid (LaF₃), Neodymfluorid (NdF₃), Ytterbiumfluorid (YbF₃), Magnesiumfluorid (MgF₂), Aluminiumfluorid (AlF₃), Dysprosiumfluorid (DyF₃), sowie Yttriumfluorid (YF₃) in Betracht.

Insbesondere die niedrig brechenden Schichtmaterialien weisen den Nachteil auf, dass sie weich sind. Bei Anti-Reflexionsbeschichtungen ist es typischerweise notwendig, eine niedrig brechende Schicht ganz außen als letzte Schicht aufzubringen. Dies ist insbesondere dann notwendig, wenn die Anti-Reflexionsbeschichtung komplex ist, d.h. wenn sie stark entspiegelt (Substratmaterialien mit hohem Brechungsindex) oder in mehreren Spektralbereichen wirksam sein soll. Daher wird häufig eine Fluorid-Schicht als oberste Schicht verwendet. Insbesondere die niedrig brechenden Schichtmaterialien weisen aber den Nachteil auf, dass sie weich und daher nicht kratzfest sind. Es wird typischerweise in optischen Designs versucht, mangelnde Kratzfestigkeit zumindest zu einem kleinen Teil durch eine sehr große Schichtdicke der letzten Schicht oder durch eine verminderte Abhängigkeit der optischen Wirksamkeit der Beschichtung von der Schichtdicke der obersten Schicht zu kompensieren.

Die verminderte Kratzbeständigkeit der weichen obersten Schicht ist nachteilig, bei einem Einsatz der jeweiligen optischen Komponente im Außenbereich, beispielsweise als Sensorfenster in militärischen Fahr- und Flugzeugen. Bei einem Einsatz beispielsweise in Wüstengebieten erhöht sich der Nachteil der mangelnden Kratzfestigkeit aufgrund des hohen Sandgehaltes in der Luft.

Um Oberflächen optischer Elemente vor einem Verkratzen zu schützen, ist es bekannt, die Oberfläche mit einer harten Beschichtung zu versehen. Aus der EP 2492251 A1 ist beispielsweise eine harte Antireflexbeschichtung bekannt.

### Kurze Beschreibung der Erfindung

Der Erfindung liegt die Aufgabe zugrunde, eine optische Komponente zur Verwendung in mehreren Spektralbereichen anzugeben, insbesondere im infraroten Bereich, wobei die Komponente auch harschen Umweltbedingungen lange standhält. Darunter fallen besonders auch eine hohe Abrasionsresistenz und eine Resistenz gegenüber klimatischen Bedingungen. Unter einer Abrasionsresistenz wird hier eine Beständigkeit bzw. Festigkeit gegenüber dem Abtragen oder Abschaben von Material, beispielsweise durch Sand, Staub oder Schmutzpartikel, insbesondere auch in Verbindung mit Wasser und/oder insbesondere mit mechanischer Einwirkung, beispielsweise durch Reiben oder Wischen, verstanden, aber auch durch senkrechte Einwirkung wie in einem Sandsturm oder beim Auftreffen während der Bewegung, z. B. beim Fahren.

Unter der Klimabeständigkeit wird hier eine Beständigkeit gegenüber Umwelteinflüssen, wie Feuchtigkeit und Temperaturbelastungen durch Wärme oder Kälte und/oder weiteren chemischen Einflüssen, wie z. B. Salzwassersprühnebel, verstanden.

Diese Aufgabe wird durch den Gegenstand des unabhängigen Anspruchs gelöst. Vorteilhafte Weiterbildungen und Ausführungsformen der Erfindung werden in den abhängigen Ansprüchen definiert.

Es hat sich gezeigt, dass sich gute Entspiegelungseigenschaften und eine hohe Abrasionsbeständigkeit bereits mit einer geringen Anzahl von Schichten erzielen lässt. Bevorzugt beträgt die Anzahl der Lagen des Schichtstapels weniger als 15, vorzugsweise weniger als 12.

Um in mehreren Wellenlängenbereichen des elektromagnetischen Spektrums einsetzbar zu sein, weist das Substrat mit dem Schichtstapel bevorzugt zusätzlich bei einer Wellenlänge in zumindest einem der folgenden Spektralbereiche eine Transmission von mindestens 80% auf:
- im sichtbaren Spektralbereich, insbesondere im Wellenlängenbereich von ca. 450 nm bis ca. 650 nm,
- im nahen Infrarotbereich von 1000 nm bis 1600 nm, insbesondere bei den Wellenlängen von 1053 nm, 1064 nm, 1535 nm oder 1550 nm.

Dieser Bereich bzw. diese Werte sind insbesondere für Entfernungsmessungen, sogenannte LIDAR (light detection and ranging) oder "Range Finder"-Anwendungen, interessant.

Erfindungsgemäß weist der Schichtstapel direkt auf dem Substrat, insbesondere als unterste Lage des Schichtstapels, eine Haftvermittlerschicht auf, die ein Material enthält, das der Gruppe entnommen ist, die Aluminiumoxid (Al₂O₃), Magnesiumoxid (MgO), Yttriumoxid (Y₂O₃), DLC (diamond-like carbon: Diamant ähnlicher Kohlenstoff), Hafniumoxid (HfO₂) und/oder Mischungen davon umfasst.

Die Haftvermittlerschicht zeigt auf dem Substrat gute Hafteigenschaften und lässt sich als Konsequenz potentiell sehr gut mit den weiteren Lagen des Schichtstapels kombinieren.

Die genannten Materialien dienen nicht nur als Haftvermittler, sondern können auch im Hinblick auf ihrer Härteeigenschaften die Stabilität der gesamten optischen Komponente erhöhen.

Bei hohen Brechungsindizes des Substrats oder der Haftvermittlerschicht spielt die Entspiegelung durch die weiteren Lages des Schichtstapels eine besondere Rolle. Dabei kann die unterste Schicht neben ihrer Rolle als Haftvermittler auch als Teil der Entspiegelung eine Rolle spielen, also Teil des optischen Schichtdesigns sein.

In einer bevorzugten Ausführungsform der optischen Komponente weist der Schichtstapel mindestens eine oxidische Lage eines ersten Typs und mindestens eine oxidische Lage eines zweiten Typs auf, wobei eine Lage des ersten Typs einen höheren Brechungsindex aufweist als eine Lage des zweiten Typs und wobei eine oberste Lage und eine zweitoberste Lage des Schichtstapels vorgesehen sind, wobei die oberste Lage eine Lage des zweiten Typs oder eine oxidische oder fluoridische Lage eines dritten Typs ist und die zweitoberste Lage eine Lage des ersten Typs ist.

Die oberste Lage des Schichtstapels steht in Kontakt mit der Umgebung und ist somit Umgebungseinflüssen ausgesetzt. Sie ist daher bevorzugt aus einem möglichst abrasionsbeständigen Material. Für eine größere Härte bzw. Abrasionsbeständigkeit ist die oberste Lage des Schichtstapels bevorzugt eine oxidische Lage, also keine fluoridische Lage.

Vorzugsweise sind für gute Antireflexeigenschaften auch in mehreren Wellenlängenbereichen mehr als drei Lagen des Schichtstapels sinnvoll.

So ist es bevorzugt, den Schichtstapel als Wechselschichtsystem mit einander abwechselnden Lagen aus oxidischen Lagen des ersten und aus mindestens zwei oxidischen oder fluoridischen Lagen des dritten Typs auszubilden, wobei die Lagen des dritten Typs einen Brechungsindex aufweisen, welcher niedriger ist als der Brechungsindex der obersten Lage.

Die Brechungsindizes der oxidischen Lagen des ersten Typs liegen bevorzugt im Bereich von 1,9 bis 2,1.

Die Brechungsindizes der oxidischen oder fluoridischen Lagen des dritten Typs liegen bevorzugt im Bereich von 1,3 bis 1,95.

Für eine größere Härte bzw. Abrasionsbeständigkeit ist die oberste Lage des Schichtstapels bevorzugt eine oxidische Lage.

Alternativ kann der Schichtstapel auch ein Wechselschichtsystem mit Lagen mit abwechselnden Brechungsindizes umfassen, wobei die oberste Lage des Schichtstapels Bestandteil des Wechselschichtsystems ist und bevorzugt einen niedrigeren Brechungsindex als die zweitoberste Lage aufweist.

In einer bevorzugten Ausgestaltung weist der Schichtstapel als unterste Lage, das heißt insbesondere in Kontakt mit dem Substrat, eine Lage mit einem von den Materialien des Wechselschichtsystems unterscheidenden Material auf.

Vorteilhafterweise umfasst die mindestens eine oxidische Lage des ersten Typs Scandiumoxid (Sc₂O₃) oder Hafniumoxid (HfO₂).

Die mindestens eine oxidische Lage des zweiten Typs enthält bevorzugt ein Material, das der Gruppe entnommen ist, die Hafniumoxid (HfO₂), Scandiumoxid (Sc₂O₃), Zirkonoxid (ZrO₂), Tantaloxid (Ta₂O₅), Nioboxid (Nb₂O₅), Yttriumoxid (Y₂O₃), Titanoxid (TiO₂), Aluminiumoxid (Al₂O₃), Ceroxid (CeO₂) und/oder Mischungen davon umfasst. Besonders bevorzugt umfasst sie Hafniumoxid (HfO₂), Scandiumoxid (Sc₂O₃), Yttriumoxid (Y₂O₃) und ganz besonders bevorzugt Aluminiumoxid (Al₂O₃).

Der Brechungsindex dieser oxidischen Lage des zweiten Typs liegt bevorzugt im Bereich von 1,7 bis 2,2.

Die oxidischen oder fluoridischen Lagen des dritten Typs umfassen vorzugsweise Aluminiumoxid (Al₂O₃), Yttriumoxid (Y₂O₃), Yttriumfluorid (YF₃) und/oder Mischungen davon.

Für eine größere Härte bzw. Abrasionsbeständigkeit ist die oberste Lage des Schichtstapels bevorzugt eine oxidische Lage, also keine fluoridische Lage.

Für eine besonders gute Kratzbeständigkeit und Klimabeständigkeit der optischen Komponente sind bevorzugt alle Lagen des Schichtstapels Oxidschichten, besonders bevorzugt ausschließlich, das heißt reine, Oxidschichten.

Dabei spielen auch die Brechungsindizes der Materialien eine Rolle. So weisen insbesondere niedrig brechenden Schichtmaterialien häufig den Nachteil auf, dass sie weich bzw. wenig abrasionsbeständig sind.

Die Oxidschichten werden dabei abhängig von dem Einsatzgebiet der betreffenden optischen Komponente für eine gute Klimabeständigkeit auch im Hinblick auf ihre besonders geringe oder fehlende Wasserlöslichkeit ausgewählt.

Sehr gute Antireflexbeschichtungen für zwei oder mehr der oben genannten Spektralbereiche, vom sichtbaren bis zum ferninfraroten die mehrheitlich oder gar komplett aus Oxiden hergestellt sind, waren bisher nicht bekannt. In fast allen bekannten oder veröffentlichten Fällen dient meist ZnS als hochbrechendes Schichtmaterial und/oder ein Fluorid als niedrigbrechendes Schichtmaterial, weil bei einfachen optischen Designs von Antireflexbeschichtungen aus Oxiden, das Schichtsystem nicht ausreichend transparent wäre.

Für den Einsatz einer optischen Komponente in zumindest einem der infraroten Spektralbereiche von 3500 nm bis 5000 nm und 7500 nm bis 12000 nm und gegebenenfalls zusätzlich im sichtbaren Wellenlängen-Bereich und/oder bei einer Laserwellenlänge im nahen Infrarotbereich zwischen 1000 nm und 1600 nm hat sich erfindungsgemäß als besonders geeignetes Substrat ein IR-Material gezeigt, bevorzugt ein IR-Glas (Chalkogenid-Gläser "IRG", wie beispielsweise IRG22, IRG24, IRG25, IRG26 oder IRG27, hergestellt von der SCHOTT AG) oder ein (mono- oder multi-)kristallines Material, das ein Zinkchalkogenid umfasst, besonders bevorzugt Zinksulfid (ZnS) oder Zinkselenid (ZnSe).

Materialien mit relativ hohen Brechungsindizes sind mit einer starken Reflexivität der Oberfläche verbunden, so dass diese Substrate mit einer komplexen Antireflexbeschichtung versehen sind bzw. werden, da sie in den genannten Spektralbereichen wirksam sein soll.

Weiterhin wird für die unterste Schicht, also die erste Lage des Schichtstapel bzw. die Schicht, die in Kontakt mit dem Substrat ist, bevorzugt ein Material gewählt wird, welches besonders gute Hafteigenschaften oder zumindest bessere Hafteigenschaften mit dem Substrat zeigt als das Material insbesondere des ersten Typs. Der Hauptzweck dieser Schicht ist die Haftvermittlung zwischen Substrat und Beschichtung. Die Schicht erfüllt somit bevorzugt einen chemischmechanischen Zweck und braucht nicht in erster Linie einen optischen Zweck zu erfüllen.

In einer speziellen Ausführungsform der optischen Komponente mit verbesserter Schichthaftung besteht die Haftvermittlerschicht bevorzugt aus Magnesiumoxid (MgO), Yttriumoxid (Y₂O₃), DLC (diamond-like carbon) oder Mischungen davon. So können insbesondere auch Mischungen von MgO mit MgₓAl_{y}O_{z}, mit MgₓSc_{y}O_{z}, mit AlₓSc_{y}O_{z} als Haftvermittlerschicht in Betracht kommen. Eine derartige Haftvermittlerschicht zeigt auf dem Substrat, umfassend Zinksulfid (ZnS) oder Zinkselenid, besonders gute Hafteigenschaften und lässt sich besonders gut mit den oben genannten weiteren Lagen des Schichtstapels kombinieren.

Für eine optische Komponente mit verbesserter Schichthaftung wird die Substratoberfläche vorzugsweise durch Ionenimplantation mit Kupferionen (Cu⁺ oder Cu²⁺) zu einer Haftvermittlerschicht modifiziert.

In einer weiteren speziellen Ausgestaltung der optischen Komponente mit verbesserter Schichthaftung wird auf der Substratoberfläche mittels alkalischen Ätzens (z. B. mithilfe von KOH) die Dichte an reaktiven OH⁻-Gruppen erhöht.

In einer speziellen Ausführungsform der optischen Komponente umfasst die unterste Lage des Schichtstapels oder die Haftvermittlerschicht bevorzugt Magnesiumoxid (MgO), Yttriumoxid (Y₂O₃), Hafniumoxid (HfO₂) oder Aluminiumoxid (Al₂O₃), zumindest eine weitere Lage des Schichtstapels umfasst vorzugsweise Scandiumoxid (Sc₂O₃) oder Hafniumoxid (HfO₂) und die oberste Lage vorteilhafterweise Aluminiumoxid (Al₂O₃).

Abhängig von der Relevanz der optischen Eigenschaften kann die Haftvermittlerschicht die dünnste Schichtdicke des Schichtstapels sein und/oder eine Schichtdicke im Bereich von wenigen Nanometern aufweisen, bevorzugt im Bereich von 5 nm bis 50nm, insbesondere 5 nm bis 30 nm.

Die Haftvermittlerschicht kann so dünn gehalten werden, dass sie optisch die Reflexionseigenschaften des Schichtstapels nicht oder nur wenig beeinflusst.

Durch eine entsprechend dickere Schichtdicke kann die Haftvermittlerschicht auch gleichzeitig ein optisch wirksamer Bestandteil des Schichtstapels sein, welcher zur Antireflexwirkung beiträgt. im Hinblick auf die Kratz- und Klimabeständigkeit weist die oberste Lage des Schichtstapels bevorzugt eine Schichtdicke im Bereich von 5 nm bis 500 nm auf.

In einer besonders vorteilhaften Ausgestaltung weist die optische Komponente einen Schichtstapel mit insgesamt zwischen fünf und dreißig Lagen auf.

Es hat sich gezeigt, dass die optische Komponente gemäß der vorliegenden Erfindung nach einem Scheibenwischertest gemäß der Norm TS1888 bevorzugt keine sichtbaren Zeichen von Verkratzungen auf der Oberfläche zeigt und vorzugsweise die Menge der Oberflächendefekte nach IS010110 im Vergleich zu einer optischen Komponente mit oberster Fluoridschicht um mindestens 20% reduziert ist und/oder nach einem "Sand & Dust"-Test gemäß MIL-STD-810G method 510.5 vorzugsweise einen Haze (Trübung) von kleiner 30% aufweist, wobei nach ASTM D 1003-00 eine Komponente als transparent anzusehen ist, wenn der Haze kleiner als 30% ist.

Ein Verfahren zur Herstellung einer erfindungsgemäßen optischen Komponente mit einer Antireflexbeschichtung wird im Anspruch 10 definiert.

Zur Herstellung der erfindungsgemäßen optischen Komponente wird bevorzugt die oben beschriebene Haftvermittlerschicht direkt auf dem oben beschriebenen Substrat abgeschieden.

In der erfindungsgemäßen Ausgestaltung des Verfahrens zur Herstellung der erfindungsgemäßen optischen Komponente wird der Schichtstapel wie oben beschrieben ausgebildet.

Zur Beschichtung der erfindungsgemäßen optischen Komponente kann die oberste Lage insbesondere mittels eines Verfahrens aufgetragen werden, das der Gruppe entnommen ist, die Ionenplattieren (Ion Plating), Ionenimplantation (Ion Implantation), ionenstrahlgestützte (Ion Assist) oder plasmaunterstützte Abscheidung (advanced Plasma Deposition), Magnetronsputtern (Magnetron Sputtering), Ionenstrahlsputtern (Ion Beam Sputtering), kathodische Lichtbogenabscheidung (Cathodic Arc Deposition) und Atomlagenabscheidung (Atomic Layer Deposition) umfasst. Gerade die Ionen- oder Plasma-Unterstützung ist von Vorteil, um die Dichte, Härte und Kompressionsspannung der obersten Lage zu erhöhen und damit resistenter gegenüber Abrasion zu machen.

Die oberste Lage des Schichtstapels der erfindungsgemäßen optischen Komponente kann auch mittels eines anderen Verfahrens abgeschieden werden als die übrigen Lagen des Schichtstapels. So ist es auch möglich, wenn mehr als eine Lage des Schichtstapels aus dem Material der obersten Schicht bestehen, dass die oberste Lage mittels eines Verfahrens abgeschieden wird und die anderen oder weiteren Lagen desselben Materials mit einem anderen Verfahren. Dies ist insbesondere von Vorteil, wenn zur Erhöhung der Dichte, Härte oder Kompressionsspannung der obersten Lage ein Verfahren genutzt wird, welches mit einem anderen Schichtmaterial nicht kompatibel ist.

In einer besonderen Ausführung der Erfindung wird der Schichtstapel mit Ausnahme der obersten Lage mittels klassischem Elektronenstrahlverdampfen abgeschieden und für die oberste Lage wird zusätzlich ein Ionen- oder Plasmaprozess hinzugeschaltet.

Dabei kann es von Vorteil sein, das Abscheiden der obersten Lage zunächst ohne den zusätzlichen Ionen- oder Plasmaprozess zu beginnen, um das darunterliegende Material der zweitobersten Lage vor dem Ionen- oder Plasmaprozess zu schützen.

Vorzugsweise wird die oberste Lage des Schichtstapels in Form zweier Unterschichten aufgebracht, wobei die zweite Unterschicht ohne einen unterstützenden Plasma- oder lonenprozess aufgebracht wird und die erste Unterschicht mit einem unterstützenden Plasma- oder lonenprozess. Dadurch kann die oberste Lage in zwei Unterschichten gleichen Materials aufgespalten werden, welche beispielsweise einen ähnlichen Brechungsindex, allerdings nicht den gleichen haben. Vorzugsweise hat der Teil, der zusätzlich mit dem Ionen- oder Plasmaprozess abgeschieden wird einen etwas erhöhten Brechungsindex als der Teil, welcher ohne den zusätzlichen Prozess abgeschieden wird.

Um die Haftung des Schichtstapels auf der Oberfläche des Substrats zu verbessern, wird die Oberfläche des Substrats vorzugsweise vor Abscheidung des Schichtstapels durch zumindest eines der Verfahren Ionenimplantation, Ätzen, Auslaugen oder nass-chemischer Ionenaustausch modifiziert.

In besonders vorteilhafter Ausgestaltung wird als Substrat ein Chalkogenid-Substrat, vorzugsweise ein Sulfid oder Selenid, verwendet und dessen Oberfläche vorzugsweise durch alkalisches Ätzen modifiziert, beispielsweise im Falle eines Zinksulfid-Substrats mit Zinkhydroxid.

Erfindungsgemäß wird die optische Komponente als Abdeck- und Schutzscheibe oder - fenster von optischen und optronischen Bauteilen verwendet, wie beispielsweise in Kameras, insbesondere Überwachungskameras, in Entfernungsmessern (range finder) und in Periskopen, die im Infrarotbereich und bevorzugt auch im sichtbaren Spektralbereich einsetzbar sind. Damit kommen Einsatzgebiete in Flug-, Luft-, Ketten-, Rad- oder Kraftfahrzeugen, insbesondere auch unbemannte Luftfahrzeuge, wie zum Beispiel auch Drohnen oder Raketen (Überschall oder Unterschall) oder Gimbal-Systemen in Betracht.

Im Folgenden wird die Erfindung unter Bezugnahme auf die beigefügten Zeichnungen detaillierter beschrieben, wobei gleiche Bezugszeichen gleiche Elemente bezeichnen.

### Kurze Beschreibung der Zeichnungen

In den Zeichnungen ist
- Fig. 1: eine schematische Darstellung der erfindungsgemäßen optischen Komponente mit einem Substrat und mit einem Schichtstapel,
- Fig. 2: eine schematische Darstellung der optischen Komponente mit einem Substrat und mit einem Schichtstapel, der als unterste Lage direkt auf dem Substrat eine Haftvermittlerschicht aufweist,
- Fig. 3: eine schematische Darstellung einer speziellen Ausgestaltung des Schichtstapels der optischen Komponente aus Fig. 1 oder Fig. 2,
- Fig. 4: ein Diagramm der Transmission eines unbeschichteten Substrats aus ZnS und von drei optischen Komponenten mit einem ZnS-Substrat, welche mit drei unterschiedlichen Designs von Schichtstapeln als Antireflexbeschichtung über der Wellenlänge im infraroten Bereich von 6000 nm bis 15000 nm aufgetragen ist und
- Fig. 5: ein Diagramm der Reflexion eines unbeschichteten Substrats aus ZnS und von drei optischen Komponenten mit einem ZnS-Substrat, welche mit drei unterschiedlichen Designs von Schichtstapeln als Antireflexbeschichtung über der Wellenlänge im sichtbaren Bereich von 400 nm bis 800 nm aufgetragen ist.
- Fig. 6: ein Diagramm der Zunahme des Haze-Werts der drei optischen Komponenten während eines Abrasionstests.

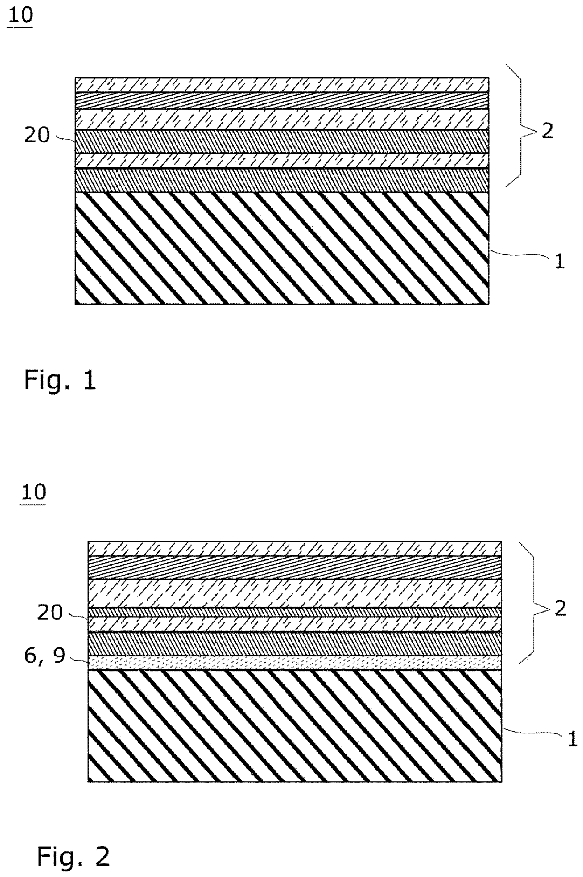

Fig. 1 zeigt als Schnitt eine schematische Darstellung der erfindungsgemäßen optischen Komponente 10 mit einem Substrat 1, welches in zumindest einem der infraroten Spektralbereiche von 3500 nm bis 5000 nm und 7500 nm bis 12000 nm teiltransparent ist, versehen mit einem Schichtstapel 2, welcher eine Antireflexbeschichtung mit mindestens drei Lagen 20 bildet, wobei die aufeinanderfolgenden Lagen 20 des Schichtstapels 2 aus mindestens drei verschiedenen Materialien oder Materialkombinationen gebildet sind, wobei mindestens 50% der Gesamtschichtdicke des Schichtstapels 2 Oxidschichten sind und/oder mindestens die Hälfte der Anzahl der Lagen des Schichtstapels 2 Oxidschichten sind und wobei das Substrat 1 mit dem Schichtstapel 2 eine Transmission von mindestens 80% bei einer Wellenlänge in zumindest einem der infraroten Spektralbereiche von 3500 nm bis 5000 nm und 7500 nm bis 12000 nm aufweist. In den Figuren ist zum Zwecke der Übersichtlichkeit jeweils nur eine der Lagen mit dem Bezugszeichen 20 bezeichnet.

In einer Variante der optischen Komponente 10 kann das Substrat 1 mit dem Schichtstapel 2 zusätzlich bei einer Wellenlänge im sichtbaren Spektralbereich und/oder im nahen Infrarotbereich von 1000 nm bis 1600 nm eine Transmission von mindestens 80% aufweisen. Substrate, die hohe Transmissionen im infraroten Spektralbereich aufweisen, sind insbesondere Chalkogenid-Substrate, wie Sulfide oder Selenide, insbesondere Zink-Chalkogenid. Besonders bevorzugt ist Zinksulfid als Substratmaterial oder mindestens als Bestandteil.

Fig. 2 zeigt eine schematische Darstellung der erfindungsgemäßen optischen Komponente 10, wobei direkt auf dem Substrat 1 bevorzugt eine Haftvermittlerschicht 6 aufgebracht ist, die die unterste Lage 9 des Schichtstapels 2 bildet. Als Haftvermittler sind insbesondere Schichten geeignet, die ein Material enthalten, das der Gruppe entnommen ist, die Aluminiumoxid (Al₂O₃), Magnesiumoxid (MgO), Yttriumoxid (Y₂O₃), DLC (Diamant ähnlicher Kohlenstoff), Hafniumoxid (HfO₂) und/oder Mischungen davon umfasst.

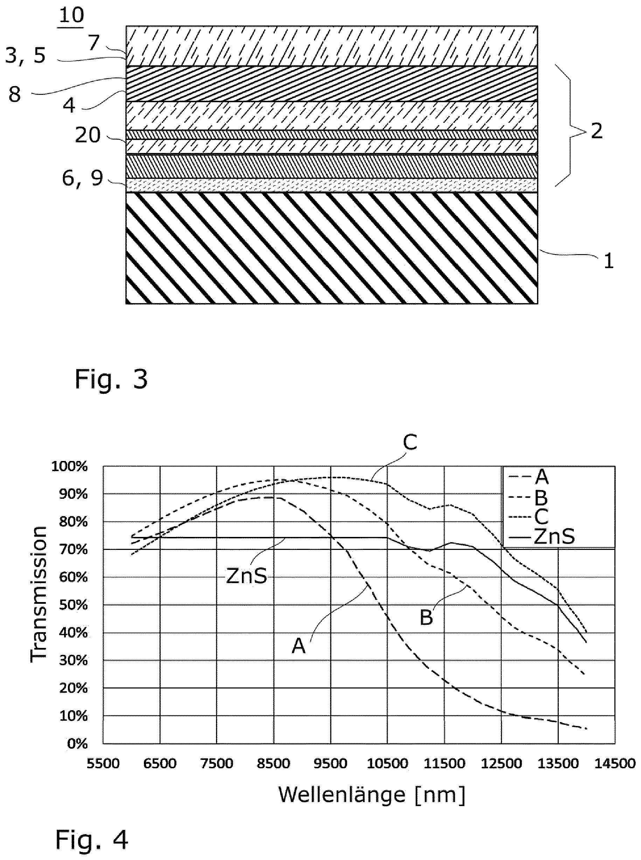

In einer bevorzugten Ausführungsform der optischen Komponente 10 weist der Schichtstapel 2 gemäß Fig. 3 mindestens eine oxidische Lage eines ersten Typs 4 auf und mindestens eine oxidische Lage eines zweiten Typs 3, wobei eine Lage des ersten Typs 4 einen höheren Brechungsindex aufweist als eine Lage des zweiten Typs 3 und wobei eine oberste Lage 7 und eine zweitoberste Lage 8 des Schichtstapels 2 vorgesehen sind, wobei die oberste Lage 7 eine oxidische Lage des zweiten Typs 3 oder eine oxidische oder fluoridische Lage eines dritten Typs 5 ist und die zweitoberste Lage 8 eine Lage des ersten Typs 4 ist.

Die oberste Lage 7 als abschließende Lage schließt gleichzeitig den Schichtstapel 2 zur Umgebung ab. Es hat sich herausgestellt, dass bei der vorgenannten Ausgestaltung die Antireflexionseigenschaften besonders gut sind. Für eine größere Härte bzw. Abrasionsbeständigkeit ist die oberste Lage 7 des Schichtstapels 2 bevorzugt eine oxidische Lage.

Für eine besonders kratzresistente und klimabeständige optische Komponente 10 sind folgende Variationen der Lagen 20 des Schichtstapels 2 bevorzugt:
Die unterste Lage 9 umfasst vorzugsweise als ein von den Materialien des Wechselschichtsystems unterscheidendes Material oder als Haftvermittlerschicht 6 bevorzugt Aluminiumoxid (Al₂O₃), Magnesiumoxid (MgO), Yttriumoxid (Y₂O₃), DLC (Diamant ähnlichen Kohlenstoff) oder Hafniumoxid (HfO₂). Darauf folgt bevorzugt ein Wechselschichtsystem mit einander abwechselnden Lagen aus oxidischen Lagen des ersten Typs 4, bevorzugt aus Scandiumoxid (Sc₂O₃) oder Hafniumoxid (HfO₂), und aus mindestens zwei oxidischen oder fluoridischen Lagen des dritten Typs 5, bevorzugt aus Aluminiumoxid (Al₂O₃), Yttriumoxid (Y₂O₃) oder Yttriumfluorid (YF₃), wobei das Wechselsystem mit einer oxidischen Lage des ersten Typs 4 oder mit einer oxidischen oder fluoridischen Lage des dritten Typs 5 beginnen kann.

Die zweitoberste Lage 8 des Schichtstapels 2 ist vorzugsweise eine Lage des ersten Typs 4, bevorzugt aus Scandiumoxid (Sc₂O₃) oder Hafniumoxid (HfO₂).

Die oberste Lage 7 des Schichtstapels 2 ist bevorzugt eine oxidische Lage des zweiten Typs 3, die insbesondere Hafniumoxid (HfO₂), Scandiumoxid (Sc₂O₃), Yttriumoxid (Y₂O₃) oder besonders bevorzugt Aluminiumoxid (Al₂O₃) umfasst. Alternativ ist die oberste Lage 7 des Schichtstapels 2 vorzugsweise eine oxidische oder fluoridische Lage des dritten Typs 5, bevorzugt aus Aluminiumoxid (Al₂O₃), Yttriumoxid (Y₂O₃) oder Yttriumfluorid (YF₃).

In einer speziellen Ausführungsform der optischen Komponente 10 umfasst die unterste Lage 9 des Schichtstapels 2 als Haftvermittlerschicht 6 bevorzugt Magnesiumoxid (MgO) oder Yttriumoxid (Y₂O₃), zumindest eine weitere Lage des Schichtstapels 2 vorzugsweise Scandiumoxid (Sc₂O₃) oder Hafniumoxid (HfO₂) und die oberste Lage 7 vorteilhafterweise Aluminiumoxid (Al₂O₃).

Vorzugsweise sind für gute Antireflexeigenschaften auch in mehreren Wellenlängenbereichen mehr als drei Lagen des Schichtstapels 2 sinnvoll.

In diesem Fall ist es bevorzugt, den Schichtstapel 2 als Wechselschichtsystem mit einander abwechselnden Lagen aus oxidischen Lagen des ersten Typs 4 und aus mindestens zwei oxidischen oder fluoridischen Lagen des dritten Typs 5 auszubilden, wobei die Lagen des dritten Typs 5 einen Brechungsindex aufweisen, welcher niedriger ist als der Brechungsindex der obersten Lage 7. Bei einem Wechselschichtsystem gemäß dieser Offenbarung wechseln sich zwar die Schichtmaterialien, nicht in der Regel oder nicht notwendigerweise aber die Schichtdicken ab.

Bei einer erfindungsgemäßen optischen Komponente 10 weist der Schichtstapel 2 nach einem als Design 2 bezeichneten Beispiel insgesamt neun Lagen auf, was hinsichtlich der Kratzbeständigkeit und der Antireflex-Wirkung einer bevorzugten Ausführungsform der Antireflexbeschichtung entspricht.

Allgemein, ohne Beschränkung auf bestimmte Beispiele ist also gemäß einer erfindungsgemäßen Ausführungsform nach Design 2 vorgesehen, dass auf dem Substrat 1 aus Zinksulfid (ZnS) oder Zinkselenid (ZnSe) als unterste Lage 9 des neun-lagigen Schichtstapels 2 Yttriumoxid (Y₂O₃), bevorzugt mit einer Schichtdicke von 30 nm, angeordnet ist. Diese unterste Lage 9 des Schichtstapels 2 ist bevorzugt eine Haftvermittlerschicht 6. Danach folgt bevorzugt ein Wechselschichtsystem mit einander abwechselnden Lagen aus oxidischen Lagen des ersten Typs 4 und aus mindestens zwei oxidischen oder fluoridischen Lagen des dritten Typs 5, wobei die Lagen des dritten Typs 5 einen Brechungsindex aufweisen, welcher niedriger ist als der Brechungsindex der obersten Lage 7. Gemäß dem Design 2 ist dieses Wechselschichtsystem mit einander abwechselnden Lagen aus vier oxidischen Lagen des ersten Typs 4 in Form von Scandiumoxid (Sc₂O₃) und aus drei fluoridischen Lagen des dritten Typs 5 in Form von Yttriumfluorid (YF₃) gebildet und einer obersten Lage 7 aus Aluminiumoxid (Al₂O₃), wobei der Brechungsindex von Yttriumfluorid (YF₃) niedriger ist als der von Aluminiumoxid (Al₂O₃).

Somit unterscheidet sich beim Design 2 das Material der unterste Lage 9 auch von den Materialien des Wechselschichtsystems.

Für eine Beschichtung gemäß dem erfindungsgemäßen Design 2 auf einem Substrat aus Zinksulfid (ZnS) mit einem Brechungsindex von 2,24 werden für den Schichtstapel folgende Lagen mit insgesamt vier verschiedenen Materialien im Schichtstapel verwendet:

### Design 2:

| **Lagen des Schichtstapels** | **Material** | **Schichtdicke (nm)** | **Brechungsindex** |
|---|---|---|---|
| oberste Lage: 2. Typs/3. Typs | Al₂O₃ | 80 | 1,765 |
| zweitoberste Lage: 1. Typs | Sc₂O₃ | 700 | 1,99 |
| Lage 3. Typs | YF₃ | 60 | 1,47 |
| Lage 1. Typs | Sc₂O₃ | 80 | 1,99 |
| Lage 3. Typs | YF₃ | 30 | 1,47 |
| Lage 1. Typs | Sc₂O₃ | 50 | 1,99 |
| Lage 3. Typs | YF₃ | 500 | 1,47 |
| Lage 1. Typs | Sc₂O₃ | 50 | 1,99 |
| unterste Lage/ Haftvermittler | Y₂O₃ | 30 | 1,93 |

Für eine größere Härte bzw. Abrasionsbeständigkeit ist die oberste Lage 7 des Schichtstapels 2 bevorzugt eine oxidische Lage.

Im Hinblick auf die optische Qualität der optischen im Sinne einer geringen Reflektivität bzw. einer großen Transmission von mindestens 80% bei einer Wellenlänge in zumindest einem der infraroten Spektralbereiche von 3500 nm bis 5000 nm und 7500 nm bis 12000 nm weist die oberste Lage 7 des Schichtstapels 2 einen Brechungsindex bevorzugt von gleich oder besonders bevorzugt von weniger als 1,95 auf.

Eine höhere Abrasionsbeständigkeit einer Mehrschicht-Beschichtung kann auch erreicht werden, wenn die zweitoberste Lage 8 härter oder stabiler ist, insbesondere einen höheren Brechungsindex aufweist, als die oberste Lage 7 des Schichtstapels 2. Dies ist auch beim Design 2 der Fall, da die zweitoberste Lage 8 Scandiumoxid umfasst, welches einen höheren Brechungsindex aufweist als das Aluminiumoxid der darüber liegenden obersten Lage 7 des Schichtstapels 2, wodurch die abschließende oberste Lage 7 durch die darunter liegende härtere Schicht eine ausreichende Stabilität erhält, ohne dass die gesamte optische Komponente 10 aufgrund der niedriger brechenden obersten Lage 7 zu stark reflektiert. Dadurch ist die erfindungsgemäße optische Komponente 10 sowohl sehr abrasionsbeständig als auch antireflektierend.

Der Brechungsindex der obersten Lage 7 ist niedriger als der Brechungsindex der zweitobersten Lage 8. Damit wird einerseits ein Entspiegelungseffekt erzielt und andererseits auch eine hohe mechanische Widerstandsfähigkeit.

Die Kratzbeständigkeit hängt somit nicht nur von den Eigenschaften der Oberfläche, also der obersten Lage des Schichtstapels, ab, sondern auch von der Härte oder der Stabilität darunter liegender Materialien und Lagen, welche die Schicht an der Oberfläche stützen. Das umgekehrte Phänomen ist auch allgemein als sogenannter "Schokokuss-Effekt" bekannt, bei der eine inhärent relativ harte Oberfläche (Schokolade) in darunter liegendes, weicheres Material (Zuckerschaum) einbrechen kann. Um diesem Effekt gegenzusteuern, bei dem die oberste Lage in die zweitoberste Lage einbricht, ist es also von Vorteil, wenn die oberste Lage aus einem weicheren Material ist als die zweitoberste Lage und auch darunter liegende Lagen aus einem Wechsel aus weicheren und härteren Lagen bzw. aus solchen mit abwechselnd niedrigeren und höheren Brechungsindizes bestehen.

Alternativ zum Design 2 kann der Schichtstapel 2 auch ein Wechselschichtsystem mit Lagen mit abwechselnden Brechungsindizes umfassen, wobei die oberste Lage 7 des Schichtstapels 2 Bestandteil des Wechselschichtsystems ist. So kann der Einfachheit halber der Schichtstapel 2 aus lediglich drei verschiedenen Materialien bestehen.

Allgemein, ohne Beschränkung auf bestimmte Beispiele ist gemäß einer entsprechenden erfindungsgemäßen Ausführungsform nach Design 1 vorgesehen, dass auf dem Substrat 1 aus Zinksulfid (ZnS) oder Zinkselenid (ZnSe) als unterste Lage 9 eines acht-lagigen Schichtstapels 2 Yttriumoxid (Y₂O₃), bevorzugt mit einer Schichtdicke von 20 nm, angeordnet ist. Diese unterste Lage 9 des Schichtstapels 2 ist bevorzugt eine Haftvermittlerschicht 6 oder bevorzugt zumindest eine Lage mit einem von den Materialien des Wechselschichtsystems unterscheidenden Material. Danach folgt bevorzugt ein Wechselschichtsystem, wobei die oberste Lage 7 des Schichtstapels 2 Bestandteil des Wechselschichtsystems ist und einen niedrigeren Brechungsindex als die zweitoberste Lage 8 aufweist und wobei alle Lagen 20 des Schichtstapels 2 reine Oxidschichten sind.

Gemäß dem Design 1 ist dieses Wechselschichtsystem mit einander abwechselnden Lagen aus vier oxidischen Lagen des dritten Typs 5 in Form von Aluminiumoxid (Al₂O₃) und aus drei oxidischen Lagen des ersten Typs 4 in Form von Hafniumoxid (HfO₂) gebildet, wobei der Brechungsindex von Aluminiumoxid (Al₂O₃) als oberster Lage 7 niedriger ist als der der zweitoberste Lage 8 in Form von Hafniumoxid (HfO₂).

Dies ist vorteilhaft, da die vorgenannten Oxide eine Kombination aus hoher Abrasionsbeständigkeit und mittlerem bis hohem Brechungsindex aufweisen.

Auch beim Design 1 unterscheidet sich das Material der unterste Lage 9 von den Materialien des Wechselschichtsystems.

Als Schicht-Materialien für eine Beschichtung gemäß dem erfindungsgemäßen Design 1 auf einem Substrat aus Zinksulfid (ZnS) mit einem Brechungsindex von 2,24 werden für den Schichtstapel folgende Lagen jeweils bei 1000 nm Wellenlänge verwendet mit insgesamt drei verschiedenen Materialien im Schichtstapel:

### Design 1:

| **Lagen des Schichtstapels** | **Material** | **Schichtdicke (nm)** | **Brechungsindex** |
|---|---|---|---|
| oberste Lage: 2. Typs/3. Typs | Al₂O₃ | 75 | 1,765 |
| zweitoberste Lage: 1. Typs | HfO₂ | 100 | 2,01 |
| Lage 3. Typs | Al₂O₃ | 1000 | 1,765 |
| Lage 1. Typs | HfO₂ | 80 | 2,01 |
| Lage 3. Typs | Al₂O₃ | 50 | 1,765 |
| Lage 1. Typs | HfO₂ | 50 | 2,01 |
| Lage 3. Typs | Al₂O₃ | 20 | 1,765 |
| unterste Lage/ Haftvermittler | Y₂O₃ | 30 | 1,93 |

Für eine größere Härte bzw. Abrasionsbeständigkeit ist die oberste Lage 7 des Schichtstapels 2 bevorzugt eine oxidische Lage.

Ohne Beschränkung auf das Beispiel des Designs 1 können alle Lagen 20 des Schichtstapels 2 oxidisch sein. Dies hat den Vorteil einer einerseits einfacheren Herstellung und zweitens einer hohen Abrasionsbeständigkeit.

Im Hinblick auf die optische Qualität der optischen im Sinne einer geringen Reflektivität bzw. einer großen Transmission von mindestens 80% bei einer Wellenlänge in zumindest einem der infraroten Spektralbereiche von 3500 nm bis 5000 nm und 7500 nm bis 12000 nm weist die oberste Lage des Schichtstapels einen Brechungsindex bevorzugt von gleich oder besonders bevorzugt von weniger als 1,95 auf.

Für gute Antireflexionseigenschaften ist sinnvoll, eine relativ niedrig brechende Schicht als oberste Schicht aufzubringen.

Eine höhere Abrasionsbeständigkeit einer Mehrschicht-Beschichtung kann auch erreicht werden, wenn die zweitoberste Lage 8 härter oder stabiler ist, insbesondere einen höheren Brechungsindex aufweist, als die oberste Lage 7 des Schichtstapels 2. Dies ist besonders beim Design 1 der Fall, da die zweitoberste Lage 8 Hafniumoxid umfasst, welches einen höheren Brechungsindex aufweist als das Aluminiumoxid der darüber liegenden obersten Lage 7 des Schichtstapels 2, wodurch die abschließende oberste Lage 8 durch die darunter liegende härtere Schicht eine ausreichende Stabilität erhält, ohne dass die gesamte optische Komponente 10 aufgrund der niedriger brechenden obersten Lage 7 zu stark reflektiert.

Somit ist die erfindungsgemäße optische Komponente 10 sowohl abrasionsbeständig als auch antireflektierend.

Der Brechungsindex der obersten Lage 7 ist niedriger als der Brechungsindex der zweitobersten Lage 8. Damit wird einerseits ein Entspiegelungseffekt erzielt und andererseits auch eine hohe mechanische Widerstandsfähigkeit.

Ein Grund für die gezielte Auswahl der Schichtmaterialien ist die Kombination von Brechungsindizes und Härte dieser Stoffe. Eine erhöhe Härte der obersten Lage 7 kann auch dadurch erzeugt werden, dass die oberste Lage 7 mit speziellen Abscheideverfahren besonders hart aufgetragen wird.

Hierfür kommen die folgenden Verfahren in Betracht: Ionenplattieren (Ion Plating), Ionenimplantation (Ion Implantation), ionenstrahlgestützte (Ion Assist) oder plasmaunterstützte Abscheidung (advanced Plasma Deposition), Magnetronsputtern (Magnetron Sputtering), Ionenstrahlsputtern (Ion Beam Sputtering), kathodische Lichtbogenabscheidung (Cathodic Arc Deposition) und Atomlagenabscheidung (Atomic Layer Deposition).

Es ist nicht notwendig, für das Aufbringen aller Lagen 20 des Schichtstapels das gleiche Verfahren zu nutzen. Verschiedene Verfahren können auch miteinander kombiniert werden. Beispielsweise können gemäß einer Ausführungsform alle Lagen bis auf die oberste Lage 7 thermisch aufgedampft werden, während die oberste Lage 7 mittels eines Sputterprozesses aufgebracht wird. Ein Wechsel des Beschichtungsverfahrens ist dann immer noch ökonomisch, wenn nur bei der obersten Lage 7 gewechselt werden muss.

Gerade die Ionen- oder Plasma-Unterstützung ist von Vorteil, um die Dichte, Härte und Kompressionsspannung der obersten Lage zu erhöhen und damit resistenter gegenüber Abrasion zu machen.

Im Folgenden werden drei optische Komponenten 10 mit verschiedenen Schichtsystemen A, B und C gemäß dieser Offenbarung hinsichtlich ihrer optischen Eigenschaften und ihrer Abrasionsbeständigkeit verglichen. Schichtsystem A hat die gleiche Schichtabfolge, mit dem Unterschied, dass die unterste Lage 9 keine Y₂O₃-Lage, sondern eine HfO₂-Lage ist. Beim ebenfalls ansonsten gleich aufgebauten Schichtsystem B ist die unterste Lage 9 aus Y₂O₃ gemäß Design 2 durch eine gleich dicke Lage aus Al₂O₃ ersetzt. Schichtsystem C entspricht dem Design 2, hat also als unterste Lage 9 eine Y₂O₃-Schicht. Alle Schichtstapel wurden auf einem ZnS-Substrat 1 aufgebracht. Die untersuchten Komponenten 10 mit den Schichtsystemen A, B, C unterscheiden sich also nur durch die Zusammensetzung der Haftvermittlerschicht 6 des Schichtstapels 2.

In Fig. 4 sind die Transmissionen eines unbeschichteten Substrats aus ZnS und von drei optischen Komponenten mit einem ZnS-Substrat und einem Schichtstapel als Antireflexbeschichtung, die die oben erläuterten Schichtsysteme A, B und C bilden, über der Wellenlänge im infraroten Bereich von 6000 nm bis 15000 nm aufgetragen.

Der Transmissionsverlauf eines unbeschichteten Substrats wird durch den mit durchgängiger Linie gezeichneten Graphen ZnS dargestellt. Die Transmission ist bei einer Wellenlänge von etwa 6000 nm bis 10500 nm gleichbleibend bei etwa 75%, fällt dann bis ca. 11300 nm auf 70% ab, steigt in einem Abschnitt bis 11600 nm auf ca. 72% und die Transmission fällt dann wieder ab, insbesondere auf 50 % bei einer Wellenlänge von 13500 nm.

Wie anhand des Diagramms zu erkennen ist, weisen alle drei optischen Komponenten mit den Schichtsystemen A, B, C eine Transmission von deutlich über 80% bei einer Wellenlänge von 8500 nm, also im Wellenlängenbereich von 7500 nm bis 12000 nm auf. Der Transmissionsverlauf eines erfindungsgemäß beschichteten ZnS-Substrats mit einer HfO₂-Haftvermittlerschicht wird durch den langgestrichelten Graphen A dargestellt. Dieser steigt mit größer werdender Wellenlänge bei einer Wellenlänge von 6500 nm von 75% über 80% bei etwa 7000 nm und auf nahezu 90% bei einer Wellenlänge von etwa 8500 nm und fällt danach wieder auf unter 80% bei einer Wellenlänge ab ca. 9300. Der Transmissionsverlauf eines weiteren erfindungsgemäß beschichteten ZnS-Substrats wird durch den kurzgestrichelten Graphen B dargestellt. Das Schichtsystem B entspricht Design 2, jedoch mit einer Al₂O₃-Schicht als unterster Lage beziehungsweise als Haftvermittlerschicht. Die Transmission steigt mit größer werdender Wellenlänge bei einer Wellenlänge von 6500 nm von über 80% auf 95% bei einer Wellenlänge von etwa 8500 nm und fällt danach wieder auf eine Transmission von 80% und darunter bei einer Wellenlänge ab 10500 nm.

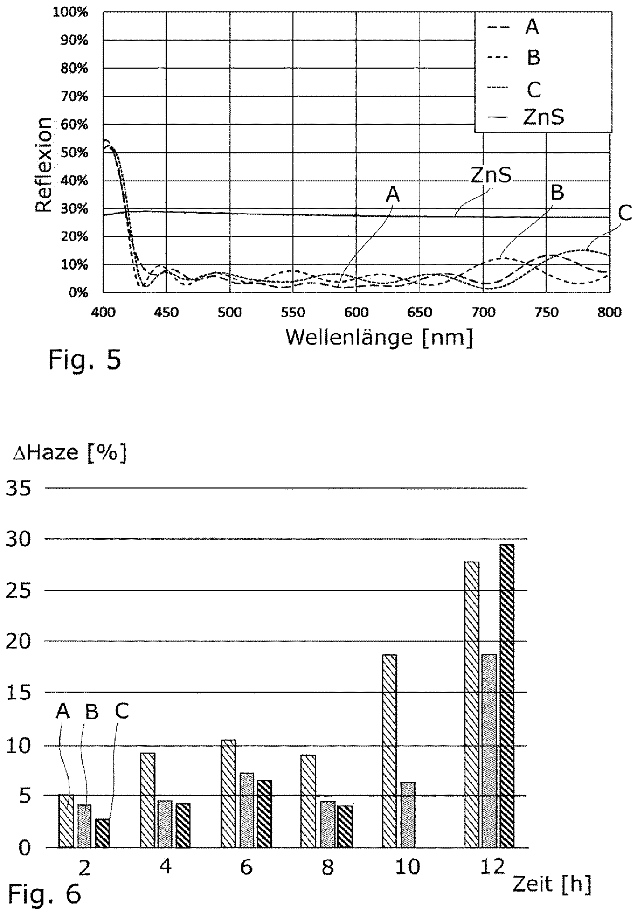

Der Transmissionsverlauf eines noch weiteren erfindungsgemäß beschichteten ZnS-Substrats wird durch den gepunkteten Graphen C dargestellt. Dieser steigt mit größer werdender Wellenlänge bei einer Wellenlänge von 6500 nm von 75% auf 95% bei einer Wellenlänge von etwa 9500 nm und fällt danach wieder auf eine Transmission von 80% und darunter bei einer Wellenlänge ab 12500. Im dargestellten Wellenlängenbereich hat das Schichtsystem C, entsprechend dem Design 2, die höchste Transmission im breitesten infraroten Spektralbereich
In Fig. 5 ist die Reflexion eines unbeschichteten Substrats aus ZnS im Vergleich mit den drei optischen Komponenten mit einem ZnS-Substrat und darauf abgeschiedenen Schichtstapeln als Antireflexbeschichtung, die die Schichtsysteme A, B, C bilden, über der Wellenlänge im sichtbaren Bereich von 400 nm bis 800 nm aufgetragen. Der Reflexionsverlauf des unbeschichteten Substrats wird durch den in durchgängiger Linie gezeichneten Graphen "ZnS" dargestellt. Die Reflexion verläuft bei einer Wellenlänge von 400 nm bis 800 nm gleichbleibend bei einer Reflexion von etwas unterhalb 30%.

Die Reflexionsverläufe der optischen Komponenten mit den Schichtsystemen A, B und C sind ähnlich. Von 400 nm bis ca. 430 nm fällt die Reflexion von 55% auf unter 10%. Die Reflexion verbleibt bei allen drei Schichtsystemen bei Wellenlängen bis zu 800 nm bei unter 20 %.

Die optischen Komponenten mit den Schichtsystemen A, B, C wurden zwecks Überprüfung ihrer Kratz- oder Abrasionsbeständigkeit zwei Standardtests unterzogen. Der erste Standardtest ist der sog. Bayer-Test gemäß ASTM F735-11, TABER.

Als abrasives Medium wird hierbei Quarzsand verwendet, der die folgenden Eigenschaften aufweist:

| | |
|---|---|
| Gradierung | 5/9 |
| Rundheit: | 0,6+ |
| Sphärizität | 0,6+ |
| Härte | 7,0 |
| S.G. | 2,65 |
| Glühverlust | 0,1 |
| MP | 2800°/3100° |
| Farbe | Braun/weiß |
| pH-Wert | 6,9-7,0 |

Die typische chemische Zusammensetzung des verwendeten Quarzsandes in Gewichtsprozent ist wie folgt:

| | |
|---|---|
| SiO₂ | 99,48 Gew.-% |
| Fe₂O₃ | 0,06 Gew.-% |
| Al₂O₃ | 0,21 Gew.-% |
| MgO | <0,01 Gew.-% |

Derartiger Quarzsand kann von Rimer Silica, Texas, USA kommerziell erworben werden.

Ein weiterer relevanter Test für solche Anwendungen und Beschichtungen ist der sogenannte Scheibenwischertest nach der Norm TS1888. Dabei wird die beschichtete Probe in einem Halter montiert und die äußere, beschichtete Oberfläche während 5 Minuten mit 5000 Wisch-Zyklen pro Stunde (2000 Züge pro Stunde) mit einer Standard-Auto-Scheibenwischer-Lippe bei einer Wischerbelastung von 20 Gramm pro cm unter Zugabe einer Mischung aus Sand und Wasser (1 cm³ Sand nach DEF STAN 07-55 Typ C, in 10 Milliliter Wasser) belastet.

Am Ende des Tests darf die Probe keine sichtbaren Anzeichen von Verkratzen zeigen, wenn sie visuell überprüft wird. Die Schichtdicke einer Standardbeschichtung mit einem Fluorid als oberster, abschließender Lage wurde bei diesem Test um durchschnittlich (makroskopisch betrachtet) 70 nm reduziert, während die Reduktion der Dicke der erfindungsgemäßen Beschichtung durchschnittlich (makroskopisch betrachtet) lediglich 12 nm betrug. Beide Beschichtungen hatten dabei die gleiche spektrale Spezifikation. Zur Analyse dieser reduzierten Schichtdicken wurde ein Reverse Engineering bezüglich des optischen Schichtdesigns vor und nach der Abrasion gemessenen Reflexionsspektren durchgeführt.

Als weiterer Standardtest zur Überprüfung der Abrasionsbeständigkeit wurde der sog. Scheibenwischer-Test mit Schmutzwasser gemäß dem Standard TS 1888 (windshield-wiper test) genutzt. Der Scheibenwischer übt hierbei einen Druck von 22 N aus und führt pro Minute 100 Bewegungen über einen Winkelbereich von 60 Grad aus. Die prozentuale Haze-Änderung wird in angemessenen Abständen gemäß dem Standard ASTM D 1003 gemessen. Sobald der durchschnittliche Haze-Wert des mittleren Sichtbereichs 5% erreicht, wird allgemein das Ende der Nutzungsdauer angenommen.

Weitere Möglichkeiten zur Überprüfung der Abrasionsbeständigkeit sind ein modifizierter Bayer-Test mit Korundsand und eine Sand- und Staub-Abrasion nach MIL-STD-810G Methode 510.5. Die Messung der Abrasionsbeständigkeit erfolgt derart, dass vor und nach Durchführung zumindest eines der beschriebenen Testverfahren mindestens einer der folgenden Parameter gemessen wird:
- Menge der Oberflächendefekte nach ISO10110,
- Größe der Oberflächendefekte nach ISO10110,
- Lichtstreuung, gemessen auf Basis des Haze-Wertes,
- Reflexion in einem definierten Wellenlängenbereich,
- Transmission in einem definierten Wellenlängenbereich, oder
- Schärfe des durch die Komponente transmittierten Bildes (Distinctness of Image (DOI)).

Fig. 6 zeigt dazu für die drei optischen Komponenten mit den Schichtsystemen A, B, C die Zunahme des Haze-Werts nach verschiedenen Dauern der Anwendung des oben genannten Tests nach MIL-STD-810G Methode 510.5. Alle drei Schichtsysteme zeigen eine sehr gute Beständigkeit gegen Verkratzen, wobei hier das Schichtsystem B mit der untersten als Haftvermittlerschicht dienenden Al₂O₃-Lage die höchste Widerstandsfähigkeit aufweist.

Vergleicht man eine erfindungsgemäße optische Komponente mit einer Komponente mit dem gleichem Substratmaterial und einer vom optischen Verhalten vergleichbaren Beschichtung, bei der die oberste Schicht jedoch aus einem Fluorid besteht, so ergibt sich eine deutliche Verbesserung in der Abrasionsbeständigkeit bei einer erfindungsgemäßen Komponente. Gegenüber einer wie oben beschriebenen optischen Komponente mit einer obersten Fluoridschicht zeigt sich, dass bei einer erfindungsgemäßen Komponente zwar ebenfalls eine Verschlechterung bei den oben genannten Parametern (Menge der Oberflächendefekte nach ISO10110, deren Größe, etc.) auftritt, diese aber mindestens um 20% reduziert ist gegenüber der optischen Komponente mit oberster Fluoridschicht.

### Tabelle:

Relative Eigenschaften der erfindungsgemäßen optischen Komponenten mit den Schichtsystemen A, B, C im Hinblick auf den sogenannten Scheibenwischertest, den Staub- und Sand-Abrasionstest und die spektrale Performance:

| **Test** | Schichtsystem A | Schichtsystem B | Schichtsystem C |
|---|---|---|---|
| Scheibenwischer-Abrasion | *** | * | ** |
| Staub-Abrasion | ** | *** | ** |
| Sand-Abrasion (45 min) | * | * | *** |
| spektrale Performance | * | ** | *** |

| | | | |
|---|---|---|---|
| ***: sehr gut **: gut *: befriedigend | | | |

Es ist dem Fachmann ersichtlich, dass die Erfindung nicht auf die Ausführungsbeispiele beschränkt ist, sondern vielmehr vielfältig im Rahmen des Gegenstands der Patentansprüche variiert werden kann. Insbesondere können die Merkmale der einzelnen Ausführungsbeispiele auch miteinander kombiniert werden.

### Bezugszeichenliste

- 1: Substrat
- 2: Schichtstapel
- 3: Lage des zweiten Typs
- 4: Lage des dritten Typs
- 5: Lage des ersten Typs
- 6: Haftvermittlerschicht
- 7: oberste Lage von 2
- 8: zweitoberste Lage von 2
- 9: unterste Lage von 2
- 10: optische Komponente
- 20: Lagen des Schichtstapels 2

## Patentansprüche

1. Optische Komponente (10) mit einem Substrat (1), welches in zumindest einem der infraroten Spektralbereiche von 3500 nm bis 5000 nm und 7500 nm bis 12000 nm teiltransparent ist, versehen mit einem Schichtstapel (2) mit insgesamt zwischen fünf und dreißig Lagen, welcher eine Antireflexbeschichtung mit mindestens drei Lagen bildet, wobei die aufeinanderfolgenden Lagen des Schichtstapels (2) aus mindestens drei verschiedenen Materialien oder Materialkombinationen gebildet sind, wobei mindestens 50% der Gesamtschichtdicke des Schichtstapels (2) Oxidschichten sind und/oder mindestens die Hälfte der Anzahl der Lagen des Schichtstapels (2) Oxidschichten sind und wobei das Substrat (1) mit dem Schichtstapel (2) eine Transmission von mindestens 80% bei einer Wellenlänge in zumindest einem der infraroten Spektralbereiche von 3500 nm bis 5000 nm und 7500 nm bis 12000 nm aufweist und wobei der Schichtstapel (2) direkt auf dem Substrat (1) eine Haftvermittlerschicht (6) aufweist, die ein Material enthält, das der Gruppe entnommen ist, die Aluminiumoxid (Al₂O₃), Magnesiumoxid (MgO), Yttriumoxid (Y₂O₃), Diamant ähnlicher Kohlenstoff (DLC), Hafniumoxid (HfO₂) und/oder Mischungen davon umfasst.

2. Optische Komponente (10) gemäß vorstehendem Anspruch, **dadurch gekennzeichnet, dass** das Substrat (1) mit dem Schichtstapel (2) zusätzlich bei einer Wellenlänge in zumindest einem der folgenden Spektralbereiche eine Transmission von mindestens 80% aufweist:
- im sichtbaren Spektralbereich,
- im nahen Infrarotbereich von 1000 nm bis 1600 nm.

3. Optische Komponente (10) nach einem der vorstehenden Ansprüche, **dadurch gekennzeichnet, dass** der Schichtstapel (2) mindestens eine oxidische Lage eines ersten Typs (4) aufweist und mindestens eine oxidische Lage eines zweiten Typs (3) aufweist, wobei eine Lage des ersten Typs (4) einen höheren Brechungsindex aufweist als eine Lage des zweiten Typs (3) und wobei eine oberste Lage (7) und eine zweitoberste Lage (8) des Schichtstapels (2) vorgesehen sind, wobei die oberste Lage (7) eine oxidische Lage des zweiten Typs (3) oder eine oxidische oder fluoridische Lage eines dritten Typs (5) ist und die zweitoberste Lage (8) eine Lage des ersten Typs (4) ist.

4. Optische Komponente (10) nach einem der vorstehenden Ansprüche, **dadurch gekennzeichnet, dass** alle Lagen des Schichtstapels (2) Oxidschichten sind.

5. Optische Komponente (10) nach einem der vorstehenden Ansprüche, **dadurch gekennzeichnet, dass** das Substrat (1) ein IR-Material ist, umfassend ein Zinkchalkogenid, insbesondere Zinksulfid (ZnS) oder Zinkselenid (ZnSe) oder ein Chalkogenid-Glas.

6. Optische Komponente (10) nach einem der vorstehenden Ansprüche, **dadurch gekennzeichnet, dass** die unterste Lage (9) des Schichtstapels (2) oder als Haftvermittlerschicht (6) Yttriumoxid (Y₂O₃), Hafniumoxid (HfO₂), Aluminiumoxid (Al₂O₃) oder Magnesiumoxid (MgO) umfasst, zumindest eine weitere Lage des Schichtstapels (2) Scandiumoxid (Sc₂O₃) oder Hafniumoxid (HfO₂) umfasst und die oberste Lage (7) Aluminiumoxid (Al₂O₃) umfasst.

7. Optische Komponente (10) nach einem der vorstehenden Ansprüche, **dadurch gekennzeichnet, dass** die Haftvermittlerschicht (6) die dünnste Schichtdicke des Schichtstapels (2) ist und/oder eine Schichtdicke im Bereich von 5 nm bis 50nm, vorzugsweise bis 30 nm aufweist.

8. Optische Komponente (10) nach einem der vorstehenden Ansprüche, **dadurch gekennzeichnet, dass** die oberste Lage (7) des Schichtstapels (2) eine Schichtdicke im Bereich von 5 nm bis 500 nm aufweist.

9. Optische Komponente (10) nach einem der vorstehenden Ansprüche, **dadurch gekennzeichnet, dass** die optische Komponente (10) nach einem Scheibenwischertest gemäß der Norm TS1888 keine sichtbaren Zeichen von Verkratzungen auf der Oberfläche zeigt und vorzugsweise die Menge der Oberflächendefekte nach ISO10110 im Vergleich zu einer optischen Komponente mit oberster Fluoridschicht um mindestens 20% reduziert ist und/oder nach einem "Sand & Dust"-Test gemäß MIL-STD-810G method 510.5 einen Haze von kleiner 30% aufweist.

10. Verfahren zur Herstellung einer optischen Komponente (10) mit einer Antireflexbeschichtung nach einem der vorhergehenden Ansprüche, **dadurch gekennzeichnet, dass** ein Substrat (1) mit einem Schichtstapel (2) mit insgesamt zwischen fünf und dreißig Lagen und mit mehreren aufeinanderfolgenden Lagen unterschiedlicher Materialien versehen wird, welcher eine Antireflexbeschichtung bildet, wobei die Lagen des Schichtstapels (2) aus mindestens drei verschiedenen Materialien oder Materialkombinationen sukzessive abgeschieden werden, wobei mindestens 50% der Gesamtschichtdicke des Schichtstapels (2) Oxidschichten sind und/oder mindestens die Hälfte der Anzahl der Lagen des Schichtstapels (2) Oxidschichten sind und wobei das Substrat (1) mit dem Schichtstapel (2) eine Transmission von mindestens 80% bei einer Wellenlänge in zumindest einem der infraroten Spektralbereiche von 3500 nm bis 5000 nm und 7500 nm bis 12000 nm aufweist.

11. Verfahren gemäß Anspruch 10, **dadurch gekennzeichnet, dass** der Schichtstapel (2) mindestens eine oxidische Lage eines ersten Typs (4) aufweist und mindestens eine oxidische Lage eines zweiten Typs (3) aufweist, wobei eine Lage des ersten Typs (4) einen höheren Brechungsindex als eine Lage des zweiten Typs (3) aufweist und wobei eine zweitoberste Lage (x) und eine oberste Lage (7) aufgebracht werden, wobei die zweitoberste Lage (8) eine Lage des ersten Typs (4) ist und die oberste Lage (7) eine Lage des zweiten Typs (3) oder eine oxidische oder fluoridische Lage eines dritten Typs (5) ist.

12. Verfahren gemäß einem der vorstehenden Ansprüche 10 bis 11, **dadurch gekennzeichnet, dass** die oberste Lage (7) des Schichtstapels (2) mittels eines der folgenden Verfahren aufgetragen wird: Ionenplattieren, Ionenimplantation, ionenstrahlgestützte oder plasmaunterstützte Abscheidung, Magnetronsputtern, Ionenstrahlsputtern, kathodische Lichtbogenabscheidung und Atomlagenabscheidung.

13. Verfahren gemäß einem der vorstehenden Ansprüche 10 bis 12, **dadurch gekennzeichnet, dass** die Oberfläche des Substrats (1) vor Abscheidung des Schichtstapels (2) durch zumindest eines der Verfahren Ionenimplantation, Ätzen, Auslaugen oder nass-chemischer Ionenaustausch modifiziert wird.

14. Verwendung der optischen Komponente (10) nach einem der Ansprüche 1 bis 9 als Abdeck- und Schutzscheibe von optischen und optronischen Bauteilen, wie Kameras, Entfernungsmesser und Periskopen, insbesondere in Flug-, Luft-, Ketten-, Rad- oder Kraftfahrzeugen, unbemannte Luftfahrzeuge, wie Raketen oder Drohnen.

## Claims

1. An optical component (10) comprising a substrate (1) which is at least partially transparent in at least one of the infrared spectral ranges from 3500 nm to 5000 nm and from 7500 nm to 12,000 nm, provided with a layer stack (2) comprising a total of between five and thirty layers forming an anti-reflection coating of at least three layers, wherein the successive layers of the layer stack (2) are formed from at least three different materials or material combinations, wherein at least 50 % of the total thickness of the layer stack (2) are oxide layers and/or at least half of the number of layers of the layer stack (2) are oxide layers; and wherein the substrate (1) together with the layer stack (2) exhibits a transmittance of at least 80 % at a wavelength in at least one of the infrared spectral ranges from 3500 nm to 5000 nm and from 7500 nm to 12000 nm; and wherein the layer stack (2) comprises an adhesion-promoting layer (6) directly on the substrate (1), which contains a material selected from the group consisting of aluminium oxide (Al₂O₃), magnesium oxide (MgO), yttrium oxide (Y₂O₃), diamond-like carbon (DLC), hafnium oxide (HfO₂), and/or mixtures thereof.

2. The optical component (10) according to the preceding claim, **characterised in that** the substrate (1) together with the layer stack (2) additionally exhibits a transmittance of at least 80 % at a wavelength in at least one of the following spectral ranges:
- in the visible spectral range;
- in the near-infrared range from 1000 nm to 1600 nm.

3. The optical component (10) according to any one of the preceding claims, **characterised in that** the layer stack (2) comprises at least one oxide layer of a first type (4) and at least one oxide layer of a second type (3), wherein a layer of the first type (4) has a higher refractive index than a layer of the second type (3), and wherein an uppermost layer (7) and a second uppermost layer (8) of the layer stack (2) are provided, the uppermost layer (7) being an oxide layer of the second type (3) or an oxide or fluoride layer of a third type (5), and the second uppermost layer (8) being a layer of the first type (4).

4. The optical component (10) according to any one of the preceding claims, **characterised in that** all layers of the layer stack (2) are oxide layers.

5. The optical component (10) according to any one of the preceding claims, **characterised in that** the substrate (1) is an IR material comprising a zinc chalcogenide, in particular zinc sulphide (ZnS) or zinc selenide (ZnSe), or a chalcogenide glass.

6. The optical component (10) according to any one of the preceding claims, **characterised in that** the lowermost layer (9) of the layer stack (2), or as an adhesion-promoting layer (6), comprises yttrium oxide (Y₂O₃), hafnium oxide (HfO₂), aluminium oxide (Al₂O₃) or magnesium oxide (MgO), at least one further layer of the layer stack (2) comprises scandium oxide (Sc₂O₃) or hafnium oxide (HfO₂), and the uppermost layer (7) comprises aluminium oxide (Al₂O₃).

7. The optical component (10) according to any one of the preceding claims, **characterised in that** the adhesion-promoting layer (6) has the smallest layer thickness of the layer stack (2) and/or has a layer thickness in the range from 5 nm to 50 nm, preferably up to 30 nm.

8. The optical component (10) according to any one of the preceding claims, **characterised in that** the uppermost layer (7) of the layer stack (2) has a layer thickness in the range from 5 nm to 500 nm.

9. The optical component (10) according to any one of the preceding claims, **characterised in that** the optical component (10) exhibits no visible signs of surface scratching following a windscreen wiper test in accordance with the TS1888 standard, and preferably exhibits a number of surface defects according to ISO 10110 that is reduced by at least 20 % compared with an optical component having an uppermost fluoride layer, and/or exhibits a haze of less than 30 % following a "Sand & Dust" test in accordance with MIL-STD-810G, Method 510.5.

10. A method for manufacturing an optical component (10) comprising an anti-reflection coating according to any one of the preceding claims, **characterised in that** a substrate (1) is provided with a layer stack (2) comprising a total of between five and thirty layers and comprising a plurality of successive layers of different materials, the layer stack forming an anti-reflection coating, wherein the layers of the layer stack (2) are successively deposited from at least three different materials or material combinations, wherein at least 50 % of the total thickness of the layer stack (2) consists of oxide layers and/or at least half of the total number of layers of the layer stack (2) are oxide layers, and wherein the substrate (1) together with the layer stack (2) exhibits a transmittance of at least 80 % at a wavelength in at least one of the infrared spectral ranges from 3500 nm to 5000 nm and from 7500 nm to 12000 nm.

11. The method according to claim 10, **characterised in that** the layer stack (2) comprises at least one oxide layer of a first type (4) and at least one oxide layer of a second type (3), wherein a layer of the first type (4) has a higher refractive index than a layer of the second type (3), and wherein a second uppermost layer (x) and an uppermost layer (7) are deposited, the second uppermost layer (8) being a layer of the first type (4), and the uppermost layer (7) being a layer of the second type (3) or an oxide or fluoride layer of a third type (5).

12. The method according to any one of claims 10 to 11, **characterised in that** the uppermost layer (7) of the layer stack (2) is deposited by one of the following techniques: ion plating, ion implantation, ion beam-assisted or plasma-assisted deposition, magnetron sputter deposition, ion beam sputter deposition, cathodic arc deposition, and atomic layer deposition.

13. The method according to any one of claims 10 to 12, **characterised in that**, prior to the deposition of the layer stack (2), the surface of the substrate (1) is modified by at least one of the following techniques: ion implantation, etching, leaching, or wet chemical ion exchange.

14. Use of the optical component (10) according to any one of claims 1 to 9 as a cover and protective window for optical and optronic components, such as cameras, rangefinders and periscopes, in particular in aircraft, aerial vehicles, tracked vehicles, wheeled vehicles or motor vehicles, unmanned aerial vehicles, such as rockets or drones.

## Revendications

1. Composant optique (10) comprenant un substrat (1) qui est semi-transparent dans au moins un des domaines spectraux infrarouges allant de 3 500 nm à 5 000 nm et de 7 500 nm à 12 000 nm, doté d'un empilement de couches (2) avec au total entre cinq et trente couches, qui forme un revêtement antireflet comportant au moins trois couches, les couches successives de l'empilement de couches (2) étant constituées d'au moins trois matériaux ou combinaisons de matériaux différents, au moins 50 % de l'épaisseur de couche totale de l'empilement de couches (2) étant des couches d'oxyde et/ou au moins la moitié du nombre de couches de l'empilement de couches (2) étant des couches d'oxyde, et le substrat (1), avec l'empilement de couches (2), présentant une transmission d'au moins 80 % pour une longueur d'onde dans au moins un des domaines spectraux infrarouges allant de 3 500 nm à 5 000 nm et de 7 500 nm à 12 000 nm, et l'empilement de couches (2) comportant, directement sur le substrat (1), une couche de promoteur d'adhérence (6) qui contient un matériau pris dans le groupe englobant l'oxyde d'aluminium (Al₂O₃), l'oxyde de magnésium (MgO), l'oxyde d'yttrium (Y₂O₃), le carbone semblable au diamant (DLC), l'oxyde d'hafnium (HfO₂) et/ou des mélanges de ceux-ci.

2. Composant optique (10) selon la revendication précédente, **caractérisé en ce que** le substrat (1), avec l'empilement de couches (2), présente une transmission d'au moins 80 % en outre pour une longueur d'onde située dans au moins un des domaines spectraux suivants :
- dans le domaine spectral visible,
- dans le domaine du proche infrarouge allant de 1 000 nm à 1 600 nm.

3. Composant optique (10) selon une des revendications précédentes, **caractérisé en ce que** l'empilement de couches (2) comporte au moins une couche à base d'oxyde d'un premier type (4) et au moins une couche à base d'oxyde d'un deuxième type (3), où une couche du premier type (4) présente un indice de réfraction supérieur à celui d'une couche du deuxième type (3), et où une couche supérieure (7) et une deuxième couche depuis le dessus (8) de l'empilement de couches (2) sont prévues, la couche supérieure (7) étant une couche à base d'oxyde du deuxième type (3) ou une couche à base d'oxyde ou à base de fluorure d'un troisième type (5), et la deuxième couche depuis le dessus (8) étant une couche du premier type (4).

4. Composant optique (10) selon une des revendications précédentes, **caractérisé en ce que** toutes les couches de l'empilement de couches (2) sont des couches d'oxyde.

5. Composant optique (10) selon une des revendications précédentes, **caractérisé en ce que** le substrat (1) est un matériau IR comprenant un chalcogénure de zinc, en particulier le sulfure de zinc (ZnS) ou le séléniure de zinc (ZnSe) ou un verre à base de chalcogénure.

6. Composant optique (10) selon une des revendications précédentes, **caractérisé en ce que** la couche inférieure (9) de l'empilement de couches (2) ou en tant que couche de promoteur d'adhérence (6) comprend de l'oxyde d'yttrium (Y₂O₃), de l'oxyde d'hafnium (HfO₂), de l'oxyde d'aluminium (Al₂O₃) ou de l'oxyde de magnésium (MgO), au moins une autre couche de l'empilement de couches (2) comprend de l'oxyde de scandium (Sc₂O₃) ou de l'oxyde d'hafnium (HfO₂), et la couche supérieure (7) comprend de l'oxyde d'aluminium (Al₂O₃).

7. Composant optique (10) selon une des revendications précédentes, **caractérisé en ce que** la couche de promoteur d'adhérence (6) est l'épaisseur de couche la plus mince de l'empilement de couches (2) et/ou présente une épaisseur de couche située dans la plage allant de 5 nm à 50 nm, de préférence jusqu'à 30 nm.

8. Composant optique (10) selon une des revendications précédentes, **caractérisé en ce que** la couche supérieure (7) de l'empilement de couches (2) présente une épaisseur de couche située dans la plage allant de 5 nm à 500 nm.

9. Composant optique (10) selon une des revendications précédentes, **caractérisé en ce que**, après un essai d'essuie-glace selon la norme TS1888, le composant optique (10) ne présente pas de signes visibles de rayures à la surface et, de préférence, la quantité de défauts de surface selon ISO10110 est réduite d'au moins 20 % par rapport à un composant optique à couche supérieure en fluorure, et/ou présente, après un essai « sand & dust » selon MIL-STD-810G method 510.5, un haze inférieur à 30 %.

10. Procédé de fabrication d'un composant optique (10) doté d'un revêtement antireflet selon une des revendications précédentes, **caractérisé en ce qu'**un substrat (1) est pourvu d'un empilement de couches (2) avec au total entre cinq et trente couches et avec plusieurs couches successives de matériaux différents, qui forme un revêtement antireflet, les couches de l'empilement de couches (2) étant séparées successivement à partir d'au moins trois matériaux ou combinaisons de matériaux différents, sachant qu'au moins 50 % de l'épaisseur de couche totale de l'empilement de couches (2) sont des couches d'oxydes et/ou au moins la moitié du nombre des couches de l'empilement de couches (2) sont des couches d'oxyde, et sachant que le substrat (1), avec l'empilement de couches (2), présente une transmission d'au moins 80 % pour une longueur d'onde dans au moins un des domaines spectraux infrarouges allant de 3 500 nm à 5 000 nm et de 7 500 nm à 12 000 nm.

11. Procédé selon la revendication 10, **caractérisé en ce que** l'empilement de couches (2) comporte au moins une couche à base d'oxyde d'un premier type (4) et au moins une couche à base d'oxyde d'un deuxième type (3), où une couche du premier type (4) présente un indice de réfraction supérieur à celui d'une couche du deuxième type (3) et où une deuxième couche depuis le dessus (x) et une couche supérieure (7) sont appliquées, la deuxième couche depuis le dessus (8) étant une couche du premier type (4), et la couche supérieure (7) étant une couche du deuxième type (3) ou une couche à base d'oxyde ou à base de fluorure d'un troisième type (5).

12. Procédé selon une des revendications 10 à 11 précédentes, **caractérisé en ce que** la couche supérieure (7) de l'empilement de couches (2) est appliquée au moyen de l'un des procédés suivants : placage ionique, implantation ionique, séparation assistée par faisceau d'ions ou par plasma, pulvérisation cathodique magnétron, pulvérisation cathodique par faisceau d'ions, séparation cathodique par arc électrique et séparation par couches atomiques.

13. Procédé selon une des revendications 10 à 12 précédentes, **caractérisé en ce que**, avant la séparation de l'empilement de couches (2), la surface du substrat (1) est modifiée par au moins un des procédés consistant en l'implantation ionique, la gravure, la lixivation ou l'échange d'ions par voie chimique humide.

14. Utilisation du composant optique (10) selon une des revendications 1 à 9, en tant que vitre de recouvrement et de protection de composants optiques et optroniques, tels que des caméras, des télémètres et des périscopes, en particulier dans des avions, aéronefs, véhicules à chaînes ou à roues ou des véhicules automobiles, des aéronefs non habités, tels que des fusées ou des drones.
